# EUROPÄISCHE PATENTSCHRIFT

(11) **EP 2 931 479 B1**
(45) Veröffentlichungstag und Bekanntmachung des Hinweises auf die Patenterteilung: **02.11.2016**
(21) Anmeldenummer: 13805835.9
(22) Anmeldetag: 10.12.2013
(51) Int. Cl.: B25D 17/08, F16B 21/18, B25D 17/06, F16B 21/16

(54) **WERKZEUGHALTER**
TOOL HOLDER
PORTE-OUTIL

(30) Priorität: 13.12.2012 DE 102012223099
(43) Veröffentlichungstag der Anmeldung: 21.10.2015
(73) Patentinhaber: Hilti Aktiengesellschaft, 9494 Schaan (LI)
(72) Erfinder: WIEDNER, Aaron, 86899 Landsberg (DE); BADER, Thomas, 86899 Landsberg (DE); HOFBRUCKER, Thomas, 82291 Mammendorf (DE)
(74) Vertreter: Hilti Aktiengesellschaft Corporate Intellectual Property
(86) Internationale Anmeldenummer: PCT/EP2013/076052
(87) Internationale Veröffentlichungsnummer: WO 2014/090786

(56) Entgegenhaltungen:
- GB-A- 2 002 081
- US-A- 2 026 454
- US-A- 2 382 948
- US-A- 2 491 306
- US-A- 3 595 123
- US-A- 4 131 165
- US-A- 5 127 764
- US-A- 5 129 118
- US-A1- 2004 026 878
- US-A1- 2011 127 054
- US-A1- 2011 290 517
- US-A1- 2012 193 879

## Beschreibung

### GEBIET DER ERFINDUNG

Die vorliegende Erfindung betrifft einen Werkzeughalter für einen handgehaltenen Bohrhammer oder andere drehende Werkzeugmaschinen gemäß dem Oberbegriff von Patentanspruch 1 und wie aus der US 2004/026878 A1 bekannt.

### OFFENBARUNG DER ERFINDUNG

Der im Anspruch 1 beanspruchte Werkzeughalter für eine Handwerkzeugmaschine, insbesondere einen Bohrhammer hat ein Rohr dessen Innenfläche einen zu einer Arbeitsachse koaxialen Aufnahmeraum für ein Einsteckende eines Werkzeugs definiert. Die Außenfläche, des Rohrs ist mit einer um die Achse umlaufenden Nut versehen. Ein radial bewegliches Verriegelungselement steht durch eine radiale Öffnung in dem Rohr teilweise in den Aufnahmeraum vor. Eine Verriegelungshülse ist auf der Außenfläche des Rohrs längs der Achse beweglich geführt. Die Verriegelungshülse liegt in einer Grundstellung an dem Verriegelungselement in radialer Richtung an. Eine Feder treibt die Verriegelungshülse in die Grundstellung. An einem Sicherungsbügel ist die Verriegelungshülse, gegen die Kraft der Feder abgestützt. Der Sicherungsbügel ist in die Nut eingesetzt ist. Der Sicherungsbügel umschließt die Nut um weniger als 250 Grad, vorzugsweise um mehr als 180 Grad. Eine Ausgestaltung sieht vor, dass der Sicherungsbügel die Nut zwischen 200 Grad und 240 Grad umschließt.

Der Sicherungsbügel hintergreift vorteilhafterweise nur geringfügig das Rohr. Ein Anwender kann den Sicherungsbügel mit leicht zugänglichen Werkzeugen, z.B. einer Zange oder einem Schraubendreher, entfernen. Den Sicherungsbügel entfernt, kann der Anwender die weiteren Komponenten des Werkzeughalters von dem Rohr abstreifen und gegebenenfalls austauschen.

Die Innenkontur des Sicherungsbügels kann bündig an dem Nutboden anliegen, also beispielsweise teilzylindrisch sein. Der umschließende Winkel definiert die Öffnungsweite des Klemmbügels im Verhältnis zu dem Durchmesser der umlaufenden Nut. Die Öffnungsweite ist für eine Klemmwirkung geringer als der Durchmesser.

Der Sicherungsbügel wird senkrecht zu dem Rohr aufgesetzt und entfernt. Ein Sprengring wird längs der Achse auf das Rohr aufgeschoben.

Erfindungsgemäß ist vorgesehen, dass die Verriegelungshülse, einen in Richtung zu dem Sicherungsbügel vorstehenden hohlzylindrischen Vorsprung aufweist. Die radiale Innenfläche des Vorsprungs liegt an dem Sicherungsbügel an, wenn die Verriegelungshülse, in der Grundstellung ist. Der Vorsprung ist von dem Sicherungsbügel durch Verschieben der Verriegelungshülse, gegen die Feder entfernbar. Der Sicherungsbügel sichert die Verriegelungshülse in axialer Richtung und die Verriegelungshülse sicher den Sicherungsbügel in radialer Richtung. Die beiden Komponenten können entfernt werden, in dem der Anwender die Verriegelungshülse gegen die Feder verschiebt. Eine Demontage ist prinzipiell ohne Werkzeug möglich.

Eine Ausgestaltung sieht vor, dass die Außenfläche, eine an die Nut längs der Achse angrenzende ebene Schlüsselfläche aufweist und der Sicherungsbügel eine Verdrehsicherung, für eine zu der Schlüsselfläche definierte Ausrichtung des Sicherungsbügels aufweist. Der Sicherungsbügel hat zwei gegenüberliegende Klemmschenkel, welche in der Nut anliegen, und einen zwischen den Klemmschenkeln zu der Achse vorstehenden Dorn. Der Dorn greift in eine in Umfangsrichtung begrenzte Vertiefung ein. Die vorgegebene Orientierung kann die Montage und Demontage erleichtern.

Eine Ausgestaltung sieht vor, dass der Sicherungsbügel einen Henkel aufweist. Der Henkel kann durch zwei in Umfangsrichtung aufeinander zulaufende Fahnen gebildet sein. Die Fahnen sind durch einen Spalt voneinander getrennt. Der Henkel erleichtert die Demontage, indem ein Anwender in das von dem Henkel umgegeben Auge eingreifen kann. Der aus zwei Fahnen gebildeten Henkel ermöglicht einen Henkel für Kräfte in Zugrichtung steifen jedoch mit einer ausreichenden Flexibilität in Umfangsrichtung auszubilden. Der Sicherungsbügels kann sich bei einer geringen Zugkraft aufweiten, um den Hintergriff aufzulösen.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrhammer
- Fig. 2: einen Werkzeughalter im Längsschnitt in der Ebene II-II
- Fig. 3: den Werkzeughalter im Längsschnitt in der Ebene III-III
- Fig. 4: einen Grundkörper des Werkzeughalters im Längsschnitt der Ebene II-II
- Fig. 5: einen Grundkörper des Werkzeughalters im Längsschnitt der Ebene III-II
- Fig. 6: den Werkzeughalter im Querschnitt in der Ebene IV-IV
- Fig. 7: den Werkzeughalter im Querschnitt in der Ebene V-V
- Fig. 8: den Werkzeughalter im Längsschnitt in der Ebene VI-VI versetzt zu der Achse

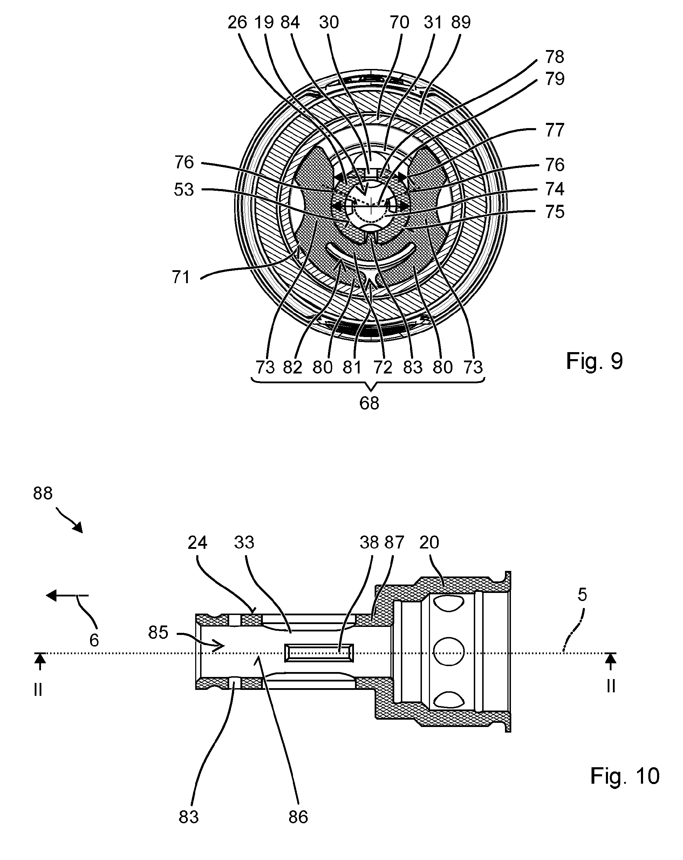

- Fig. 9: den Werkzeughalter im Querschnitt in der Ebene VII-VII
- Fig. 10: einen alternativen Grundkörper des Werkzeughalters

Gleiche oder funktionsgleiche Elemente werden durch gleiche Bezugszeichen in den Figuren indiziert, soweit nicht anders angegeben. Die relative Lage entlang der Achse einzelner Elemente wird nachfolgend mit vorne und hinten angegeben. Hierbei wird auf die Arbeitsrichtung, typischerweise gleich der Blickrichtung des Anwenders, während der Nutzung der Handwerkzeugmaschine abgestellt. Synonym bezeichnen maschinenseitig vorne bzw. werkzeugseitig hinten. Die radiale Richtung bezieht sich soweit nicht anders angegeben auf die Achse des Werkzeughalters.

### AUSFÜHRUNGSFORMEN DER ERFINDUNG

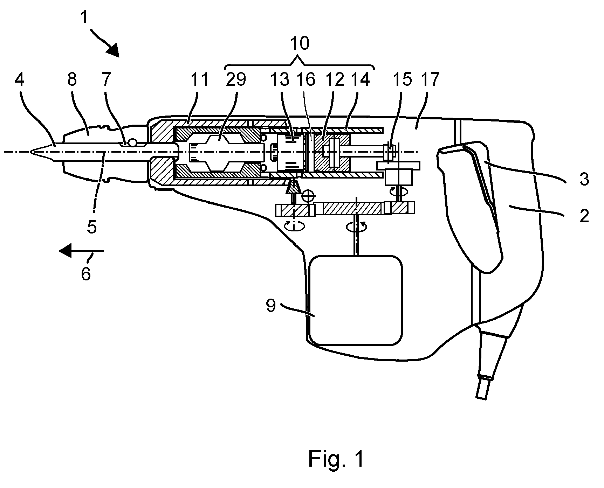

Fig. 1 zeigt als Beispiel einer meißelnden Handwerkzeugmaschine schematisch einen Bohrhammer **1.** Ein Anwender kann den Bohrhammer **1** mittels eines Handgriffs **2** führen und dabei mittels eines Systemschalters **3** den Bohrhammer **1** in Betrieb nehmen. Der beispielhafte Bohrhammer **1** dreht einen Bohrer **4** oder ein anderes Werkzeug kontinuierlich um eine Arbeitsachse **5** und schlägt dabei den Bohrer **4** in Schlagrichtung **6** längs der Arbeitsachse **5** in einen Untergrund. Vorzugsweise sind die Drehbewegung und die Schlagfunktion durch den Anwender einzeln aktivierbar. Ein Einsteckende **7** des Bohrmeißels **4** ist in einem Werkzeughalter **8** der Handwerkzeugmaschine lösbar verriegelt. Der Bohrmeißel **4** kann in Schlagrichtung **6** aus dem Werkzeughalter 8 entnommen werden.

Einen primären Antrieb des Bohrhammers **1** bildet ein Motor **9,** welcher ein Schlagwerk **10** und eine Abtriebswelle **11** antreibt. Die Abtriebswelle **11** dreht den Werkzeughalter **8** um die Achse **5.**

Das Schlagwerk **10** ist beispielsweise ein pneumatisches Schlagwerk **10.** Ein Erreger **12** und ein Schläger **13** sind in dem Schlagwerk **10** längs der Arbeitsachse **5,** z.B. in einem Führungsrohr **14,** beweglich geführt. Der Erreger **12** ist über einen Exzenter **15** oder einen Taumelfinger an den Motor **9** angekoppelt und zu einer periodischen, linearen Bewegung gezwungen. Eine Luftfeder gebildet durch eine pneumatische Kammer **16** zwischen Erreger **12** und Schläger **13** koppelt eine Bewegung des Schlägers **13** an die Bewegung des Erregers **12** an. Der Schläger **13** kann direkt auf eine Schlagfläche des Bohrmeißels **4** aufschlagen oder mittelbar über einen im Wesentlichen ruhenden Zwischenschläger **16** einen Teil seines Impuls auf den Bohrmeißel **4** übertragen. Das Schlagwerk **10** und vorzugsweise die weiteren Antriebskomponenten sind innerhalb eines Maschinengehäuses **17** angeordnet.

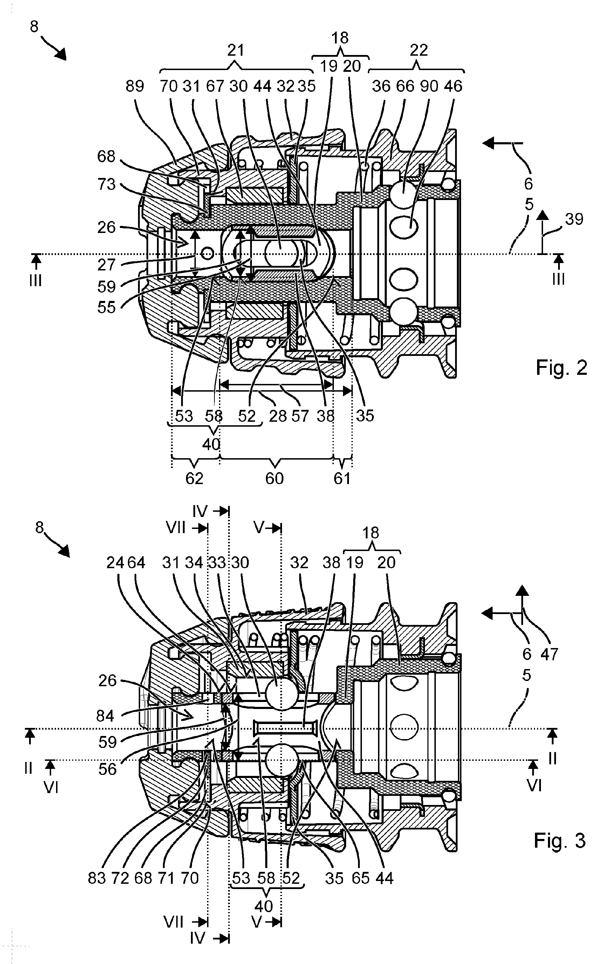

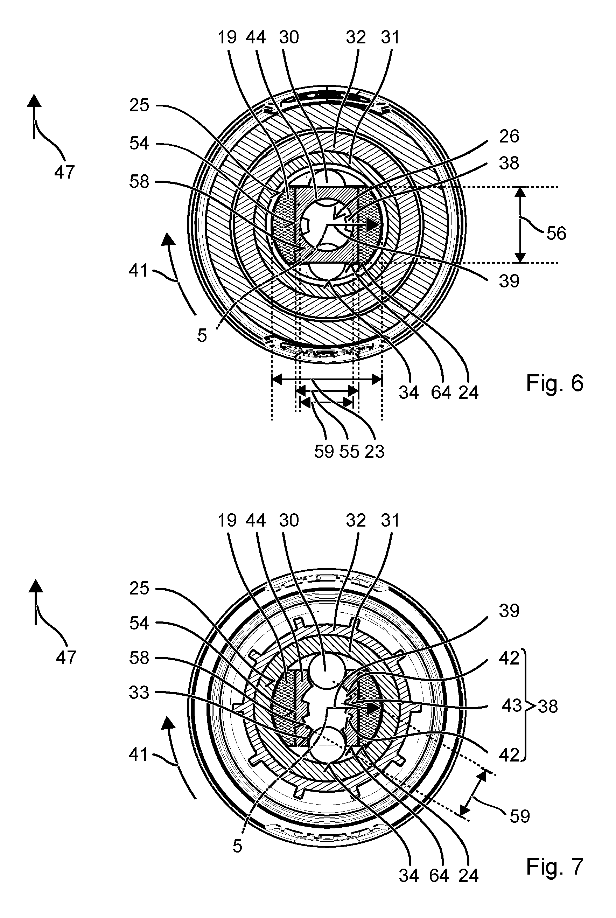

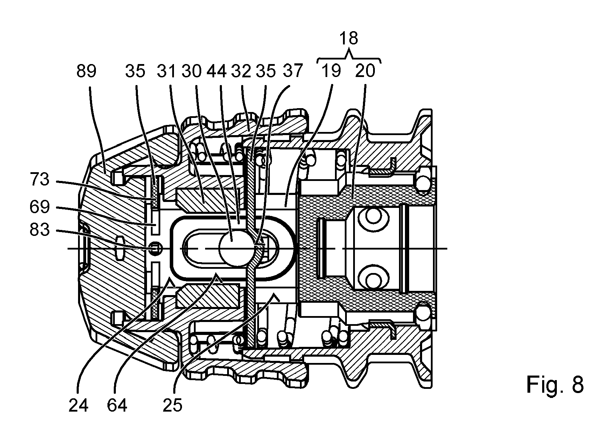

Fig. 2 zeigt den Werkzeughalter **8** des Bohrhammers **1** in einem ersten Längsschnitt entlang der Achse **5** und Fig. 3 in einem um 90 gedreht liegenden Längsschnitt. Figuren 6 bis 8 zeigen mehrere senkrecht zur Achse **5** verlaufende Querschnitte des Werkzeughalters **8.**

Der Werkzeughalter **8** hat einen Grundkörper **18,** über den das Drehmoment von dem Motor **9** auf das Einsteckende **7** übertragen wird. Der beispielhafte monolithische Grundkörper **18** besteht aus einem Rohr **19** und einem Flansch **20.** Der Grundkörper **18** ist beispielsweise aus einem Stahlrohr gefertigt. Das Rohr **19** und der Flansch **20** sind konzentrisch zu der Arbeitsachse **5.** Eine händisch betätigbar Werkzeugverriegelung **21** ist auf dem Rohr **19** angeordnet, welche ein in das Rohr **19** eingesetztes Einsteckende **7** verriegelt. Eine vorzugsweise händisch lösbare Flanschverriegelung **22** ist um den Flansch **20** angeordnet, welche den Flansch **20** drehfest mit der Abtriebswelle **11** koppelt.

Das Rohr **19** hat eine weitgehend prismatische Außenfläche, die vorzugsweise von einem Kreiszylinder mit einem Außendurchmesser **23** abgeleitet ist. Die Außenfläche kann in einem Sektor oder in zwei diametral gegenüberliegenden Sektoren zu Schlüsselflächen **24** gegenüber dem Außendurchmesser **23** zurückgenommen sein. Die Schlüsselflächen **24** sind vorzugsweise eben. Die anderen Sektoren **25** der Außenfläche sind vorzugsweise kreiszylindrisch.

Das Rohr **19** definiert durch seine radial zur Achse **5** weisenden Innenflächen Wandflächen eines Aufnahmeraums **26** zum Aufnehmen des Einsteckendes **7.** Der Innendurchmesser **27** des Aufnahmeraums **26** ist etwa gleich dem Durchmesser des gängigen SDS-Einsteckendes **7** von Hammerbohrern **4.** Die Länge **28** des Rohrs **19** ist ausreichend um das SDS-Einsteckende **7** mit dessen Verriegelungsnuten und Drehmitnahmenuten vollständig aufnehmen zu können. Eine Schlagfläche des Einsteckendes **7** steht etwas nach vorne über das Rohr **19** hinaus, um den Schlag des Zwischenschlägers **29** oder Schlägers **13** aufzunehmen.

Die Werkzeugverriegelung **21** hat wenigstens ein Verriegelungselement **30.** Die Verriegelungselemente **30** ragen teilweise in den Aufnahmeraum **26** hin und können zum Einsetzung und Entnehmen des Werkzeugs **4** aus dem Aufnahmeraum **26** in radialer Richtung ausweichen. Die Werkzeugverriegelung **21** hat eine auf dem Rohr **19** geführte Buchse **31.** Die Buchse **31** ist in der Verriegelungsstellung derart über die Verriegelungselemente **30** geschoben, dass deren radiale Bewegung gehemmt ist und die Verriegelungselemente **30** in Eingriff mit dem Aufnahmeraum **26** gezwungen sind. Der Anwender kann die Buchse **31** mittels einer Griffhülse **32** längs der Achse **5** verschieben, um die radiale Hemmung der Verriegelungselemente **30** aufzuheben. Beispiele für die Verriegelungselemente **30** sind Kugeln, Zylinder, schwenkbare Klinken.

Die beispielhafte Werkzeugverriegelung **21** hat zwei Verriegelungskugeln **30** als Verriegelungselemente. Die Verriegelungskugeln **30** liegen jeweils in einer, vorzugweise länglichen zu der Achse **5** parallelen, Lagerschale **33.** Die Lagerschale **33** ist in radialer Richtung zu dem Aufnahmeraum **26** derart offen, dass die Verriegelungskugeln **30** in den Aufnahmeraum **26** hineinragen. Die Lagerschale **33** ist zu der Achse **5** hin verjüngt, damit die Verriegelungskugeln **30** nicht in den Aufnahmeraum **26** hineinfallen können. Die Verriegelungskugeln **30** können in der Lagerschale 33 längs der Achse **5** beweglich sein. Die Lagerschale **33** ist vorzugsweise in den ebenen Schlüsselflächen **24** ausgebildet. Die Verriegelungskugeln **30** stehen vorzugsweise etwa um die Hälfte ihres Durchmessers über die Schlüsselfläche **24** hinaus.

Eine Hemmung der Verriegelungskugeln **30** in radialer Richtung erfolgt durch eine hohlzylindrische Innenfläche **34** der Buchse **31.** Die Buchse **31** überlappt längs der Achse **5** vorzugsweise nur mit einem hinteren Teilbereich der Lagerschale **33.** Die Verriegelungskugeln **30** können in dem vorderen Teilbereich radial vollständig aus dem Aufnahmeraum **26** ausweichen. Ein Schieber **35** hält die Verriegelungskugeln **30** in dem hinteren Teilbereich, d.h. innerhalb der Buchse **31.** Der Schieber **35** ist auf dem Rohr **19** längs der Achse **5,** relativ zu der Buchse **31** verschiebbar. Eine Feder **36** drückt den Schieber **35** für eine Grundstellung gegen die Buchse **31.** Eine zur der Buchse **31** weisende Schubfläche **37** des Schiebers **35** überlappt in radialer Richtung wenigstens teilweise mit den Verriegelungskugeln **30.** Sofern die Verriegelungskugeln **30** in dem vorderen Teilbereich der Lagerschale **33** sind, berührt die Schubfläche **37** die Verriegelungskugeln **30.** Die Schubfläche **37** kann eine konkav gebogene, beispielsweise Hohlkalotten-förmige, Kontur aufweisen. Der Schieber **35** ist vorzugsweise als ein das Rohr **19** umspannender Ring ausgebildet. Der Schieber **35** ist auf den Schlüsselflächen **24** geführt.

Beim Einsetzen des Werkzeugs **4** wird der Schieber **35** mittelbar durch die Verriegelungskugeln **30** gegen die Federkraft von der Buchse **31** entfernt, die Verriegelungskugeln **30** können in den vorderen Teilbereich der Lagerschale **33** gleiten und in radialer Richtung dem Einsteckende **7** ausweichen. Sobald das Einsteckende **7** vollständig eingesetzt ist, fallen die Verriegelungskugeln **30** in die Verriegelungsnuten des Einsteckendes **7** und der Schieber **35** schiebt getrieben durch die Feder **36** die Verriegelungskugeln **30** unter die Buchse **31.**

Der Werkzeughalter **8** hat eine Drehmitnahme für das Einsteckende **7,** welche die Drehbewegung des Rohrs **19** auf das Einsteckende **7** überträgt. Die Drehmitnahme ist durch ein, zwei oder mehrere vorzugsweise prismatische Drehmitnahmestege **38** ausgebildet. Der Drehmitnahmesteg **38** ist parallel zu der Achse **5** ausgerichtet. Der Drehmitnahmesteg **38** hat seine größte Abmessung längs der Achse **5** und der vorzugsweise trapezförmige Querschnitt des Drehmitnahmestegs **38** ist längs der Achse **5** konstant.

Der Drehmitnahmesteg **38** erhebt sich längs einer vertikalen Richtung **39** von der ansonsten konkaven, vorzugsweise zylindrischen Innenfläche **40** des Aufnahmeraums **26** zu der Achse **5.** Die vertikale Richtung **39** sei die zylindrische Geometrie des Werkzeughalters **8** berücksichtigend in Anlehnung an zylindrische Koordinaten wie folgt definiert: die vertikale Richtung **39** verläuft von dem Drehmitnahmesteg **38** in die Achse **5.** Die vertikale Richtung **39** steht ferner senkrecht auf der Achse **5.** Das natürliche Verständnis von Höhe und vertikaler Richtung **39** erhält man durch Abrollen der Innenfläche **40.** Bezogen auf ein kartesisches Koordinatensystem hat jeder Drehmitnahmesteg **38** seine eigene vertikale Richtung **39.**

Der Drehmitnahmesteg **38** wird in seiner in Umfangsrichtung **41** bestimmten Breite durch zwei Mitnahmeflächen **42** begrenzt. Die vorzugsweise ebene Mitnahmefläche **42** überträgt ein Drehmoment von dem Rohr **19** auf das Einsteckende **7.** Die Mitnahmefläche **42** ist im wesentlichen parallel zu einer radialen Richtung; die Mitnahmefläche **42** liegt in einer Ebene mit der Achse **5.** Eine Dachfläche **43** des Drehmitnahmestegs **38** schließt den Drehmitnahmesteg **38** in radialer Richtung ab und definiert dessen Höhe. Die Dachfläche **43** ist der Achse **5** zugewandt, insbesondere kann die vertikale Richtung **39** senkrecht zu der Dachfläche **43** sein.

Die dargestellte Ausführungsform hat einen in das Rohr **19** eingelegten Einsatz **44,** welcher die Lagerschalen **33** für die Verriegelungselemente **30** und die Drehmitnahmestege 38 für die Drehmitnahme ausbildet.

Das Rohr **19** hat koaxial zu der Achse **5** einen zylindrischen Hohlraum, der in seinen Abmessungen gleich dem Aufnahmeraum **26** ist. Die zylindrische Form kann kreiszylindrisch und prismatisch mit einer wenigstens sechszähligen Symmetrie umfassen.

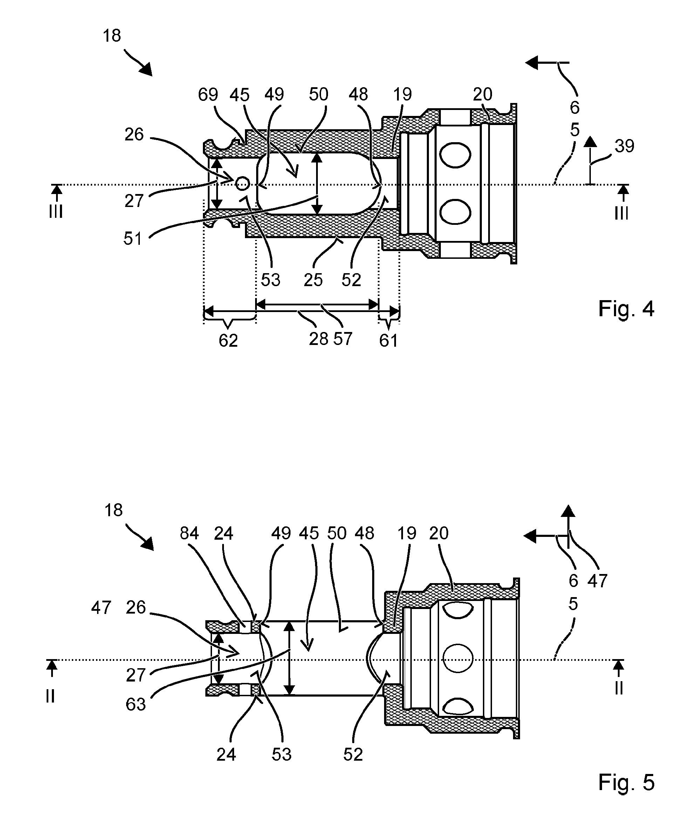

Das Rohr **19** ist längs einer quer zu der Achse **5** durch eine prismatische Aussparung **45** geöffnet (vgl. Fig. 4 und 5). Die Aussparung **45** kann eine oder zwei gegenüberliegende Öffnungen **46** durch die Wand des Rohrs **19** ausbilden. Die Öffnung hat einen um die Ausrichtungsachse **47** geschlossenen Rand. Die Aussparung **45** hat eine in Entnahmerichtung **6** weisende, vordere Fläche **48** und eine entgegen der Entnahmerichtung **6** weisende, hintere Fläche **49.** Zwei seitliche Flächen **50** der Aussparung **45** verbinden die vordere Fläche **48** mit der hinteren Fläche **49.** Die Flächen **48, 49, 50** sind parallel zu einer Ausrichtungsachse **47.** Die Ausrichtungsachse **47** gibt die Orientierung der Aussparung **45** und der sie begrenzender Flächen **50** vor. Beispielhaft kann die Ausrichtungsachse **47** basierend als Verbindungslinie der Mitte (Flächenschwerpunkt) der Öffnung an der Außenseite des Rohrs **19** und an der Innenseite des Rohrs **19** bestimmt werden. Die Aussparung **45** kann auch pyramidenstumpf-förmig ausgebildet sein. Die Flächen **48, 49, 50** sind derart gegenüber einander geneigt, dass sich ein von ihnen umschlossener Querschnitt in einer Richtung längs der Ausrichtungsachse **47** monoton verringert. Die Aussparung **45** erweitert den Hohlraum des Rohrs **19** gegenüber dem Innendurchmesser **27** vorzugsweise in allen Richtungen innerhalb einer Ebene senkrecht zu der Achse **5.** Insbesondere ist vorzugsweise ein Abstand **51** der seitlichen Flächen **50** zueinander größer als der Innendurchmesser **27.** Die zylindrische Innenfläche des Rohrs **19** kann durch die Aussparung **45** in zwei voneinander vollständig separierte vordere zylindrische Innenfläche **52** und eine hintere zylindrische Innenfläche **53** unterteilt sein.

Die Außenkontur des Einsatzes **44** ist komplementär zu der Aussparung **45** ausgebildet. Der beispielhafte Einsatz **44** hat eine im wesentlichen quaderförmige Außenkontur, mit einer beispielsweise vorderen gerundeten Stirnseite. Die längs der Ausrichtungsachse **47** und längs der Achse **5** verlaufenden Seitenflächen **54** liegen vorzugsweise flächig an den komplementären seitlichen Flächen der Aussparung **45** an. Die Seitenflächen **54** können wenigstens zu einer von der Achse **5** und der Ausrichtungsachse **47** parallel sein.

Eine Breite **55** und eine Höhe **56** des Einsatzes **44** sind größer als der Durchmesser **27** des Aufnahmeraums **26.** Die Höhe **56** wird längs der Ausrichtungsachse **47** und die Breite **55** senkrecht zu der Ausrichtungsachse **47** jeweils in einer Projektion auf eine Ebene senkrecht zu der Achse **5** bestimmt. Eine Länge **57** des Einsatzes **44,** ergo der Aussparung **45,** ist geringer als die Länge **28** des zylindrischen Rohrs **19.** Der Einsatz **44** hat einen koaxial zu der Achse **5** verlaufenden Hohlraum. Die Innenfläche **58** des Einsatzes **44** ist im Wesentlichen konkav, vorzugsweise zylindrisch. Ein Innendurchmesser **59** des Einsatzes **44** ist gleich oder etwas größer als der Innendurchmesser **27** des Rohrs **19.**

Der Aufnahmeraum **26** für das Werkzeug setzt sich aus zwei oder drei Abschnitten zusammen. Einen Abschnitt **60** bildet der Hohlraum des Einsatzes **44.** Die vordere zylindrische Innenfläche **52** des Rohrs **19** kann einen an den Einsatz **44** angrenzenden vorderen Abschnitt **61** und die hintere zylindrische Innenfläche **53** des Rohrs **19** kann einen an den Einsatz **44** angrenzenden hinteren Abschnitt **62** ausbilden. Die von dem Rohr **19** gebildeten äußeren Abschnitte **61, 62** haben vorzugsweise einen etwas geringeren Innendurchmesser **27,** wodurch auf das Werkzeug quer zu der Achse **5** wirkende Biegekräfte direkt auf das Rohr **19** und den Grundkörper **18** übertragen werden, ohne den Einsatz **44** zu belasten. Das Rohr **19** kann aus einem entsprechend zähen Stahl geformt sein.

Die Höhe **56,** d.h. die Abmessung längs der Ausrichtungsachse **47,** des Einsatzes **44** ist etwa gleich der entsprechenden Außenabmessung **63** des Rohrs **19.** Die freiliegenden Außenflächen **64** (Deckflächen) des Einsatzes **44** schließen weitgehend bündig mit dem Grundkörper **18** ab, hier beispielhaft mit den ebenen Schlüsselflächen **24.** Die zuvor beschriebene Lagerschale **33** für die Verriegelungskugel **30** ist in einer oder beiden Deckflächen **64** ausgebildet. Die Deckflächen **64** des Einsatzes **44** sind vorzugsweise eben.

Der Einsatz **44** ist mit den Drehmitnahmestegen **38** ausgebildet. Vorzugsweise sind sämtliche Drehmitnahmestege **38** des Werkzeughalters **8** Teil des Einsatzes **44.** Zahl, Geometrie und Orientierung der Drehmitnahmestege **38** ist wie obig beschrieben. Die Drehmitnahmesteg **38** stehen von der konkaven Innenfläche **58** des Einsatzes **44** in die vertikale Richtung **39** vor. Die vertikale Richtung **39** verläuft auf der jeweiligen Verbindungslinie von dem Drehmitnahmesteg **38** zu der Achse **5.**

Die vertikale Richtung **39** wenigstens eines oder vorzugsweise aller Drehmitnahmestege **38** ist geneigt, beispielsweise senkrecht, zu der Ausrichtungsachse **47** der Aussparung **45.** Der Drehmitnahmesteg **38** stützt sich in seiner vertikalen Richtung **39** an dem Rohr **19** ab. Die vertikale Richtung **39** des Drehmitnahmestegs **38** verläuft durch die von dem Rohr **19** verdeckte Seitenfläche **54** des Einsatzes **44** und nicht durch die freiliegende Deckfläche **64.** Beim Einsetzen des Einsatzes **44** in die Aussparung **45** ist die Dachfläche **43** des Drehmitnahmestegs **38** von der Achse **5** teilweise oder vorzugsweise vollständig von der Achse **5** abgewandt.

Das Bestimmen der relativen Neigung der beiden Richtungen **39, 47** erfolgt in einer Projektion auf die Ebene senkrecht zu der Achse **5,** falls die Ausrichtungsachse **47** nicht senkrecht zu der Achse **5** sein sollte.

Der Einsatz **44** mit den Drehmitnahmestegen **38** ist vorzugsweise monolithisch. Monolithisch ist hierbei als das Gegenteil eines aus zwei oder mehr Teilen gefügten Körpers zu verstehen. Der monolithische Einsatz **44** hat keine Fügezonen, weder formschlüssiger, kraftschlüssiger noch materialschlüssiger, z.B. durch Löten, Kleben, Schweißen, Art. Der Einsatz **44** ist aus einem Rohling geformt.

Der Einsatz **44** liegt vorzugsweise lose in der Aussparung **45,** um bei Bedarfsfall ohne Montagewerkzeug aus dem Grundkörper **18** entnehmbar zu sein. Insbesondere ist der Einsatz **44** auf kein materialschlüssige Weise, z.B. geklebt, gelötet, geschweißt, in dem Rohr **19** befestigt. Sobald ein Hammerbohrer **4** in den Aufnahmeraum **26** eingesetzt und damit durch den zylindrischen Hohlraum des Einsatzes **44** geschoben ist, ist der Einsatz **44** stabilisiert. Der Schieber **35** kann ferner ausgebildet sein, den Einsatz **44** in Position zu halten. Der Schieber umschließt ringförmig das Rohr **19** des Grundkörpers **18** und hat eine Innenkontur **65,** die an den Deckflächen **64** des Einsatzes **44** anliegt. Bei der verriegelnden Grundstellung des Werkzeughalters **8** ist der Schieber **35** etwa mittig zu dem Einsatz **44** angeordnet. Die Länge **57** des Einsatzes **44** ist ferner so ausgelegt, dass beim Einsetzen des Hammerbohrers **4** der Schieber **35** nicht von dem Einsatz **44** heruntergeschoben wird.

Die Aussparung **45** kann längs der Ausrichtungsachse **47** auf einer Seite durch einen Boden geschlossen sein, d.h. topfförmig ausgebildet sein. Eine Stärke des Bodens ist gleich oder geringer der Wandstärke des Rohrs **19.** Der zugehörige Einsatz **44** umschließt ringförmig den Aufnahmeraum **26.** Der Einsatz **44** hat nur eine freiliegende Deckfläche **64** und eine Lagerschale **33.** Ferner hat der Einsatz **44** innerhalb seines Hohlraums ein oder mehrere Drehmitnahmestege **38** für die Drehmitnahme.

Die Baugruppen der Flanschverriegelung **22** und der Werkzeugverriegelung **21** können von dem Grundkörper **18** abgenommen werden. Dies ist insbesondere zum Austauschen der beiden Betätigungshülsen **66, 32,** der Verriegelungskugeln **30** und ggf. des Einsatzes **44** nützlich.

Die Betätigungshülse **32** ist mittels einer in Entnahmerichtung **6** weisenden Stirnfläche **67** an einem axial unbeweglichen Sicherungsbügel **68** abgestützt. Der Sicherungsbügel **68** sitzt in einer Nut **69,** welche entlang des Umfangs an einem werkzeugseitigem Ende des Grundkörpers **18** vorgesehen ist. Die Betätigungshülse **32** hat einen hohlzylindrischen Vorsprung **70,** welcher den Sicherungsbügel **68** in radialer Richtung umschließt. Der Vorsprung **70** liegt mit seiner radialen Innenfläche **71** unmittelbar an dem Sicherungsbügel **68** an. Der Anwender kann die Betätigungshülse **32** gegen eine Feder **36** axial verschieben, um den Sicherungsbügel 68 in radialer Richtung freizugeben und um den Sicherungsbügel **68** aus der Nut **69** abzuziehen.

Der Sicherungsbügel **68** ist weitgehend symmetrisch aufgebaut. Ein Steg **72** verbindet zwei gegenüberliegende Klemmschenkel **73.** Die beiden Klemmschenkel **73** greifen in die Nut **69** des Grundkörpers **18** ein. Der Steg **72** kann ebenfalls in die Nut **69** eingreifen oder freiliegen. Das Rohr **19** ist nur teilweise von dem Sicherungsbügel **68** umschlossen, um diesen ohne großen Kraftaufwand abziehen zu können. Die Klemmschenkel **73** sollen dabei geringfügig gespreizt werden, um ein versehentliches Herausfallen zu vermeiden. Der umschlossene Winkel **74** ist geringer als 250 Grad und liegt vorzugsweise im Bereich zwischen 210 Grad und 240 Grad. Der Winkel **74** wird am Nutboden **75** zwischen den beiden entlang der Umfangsrichtung **41** äußersten von den Klemmschenkeln **73** berührten Punkten **76** gemessen. Die Innenkontur des Sicherungsbügels **68** zwischen den beiden Punkten **76** ist vorzugsweise weitgehend kreissegmentförmig, und liegt durchgehend an dem Nutboden **75** an. Die in Steckrichtung nach vorne weisenden Abschnitte **77** der Klemmschenkel **73** definieren eine Öffnungsweite **78** des Sicherungsbügels **68.** Die vorderen Abschnitte **77** sind über in Einsteckrichtung über den Nutboden **75** hinausgeschoben und daher freiliegend. Die Öffnungsweite **78,** d.h. der Abstand **78** der Klemmschenkel **73,** liegt im Bereich von mindestens 80 %, vorzugsweise zwischen 87 % und 97 %, des Durchmessers **79** der Nut **69.**

Der Sicherungsbügel **68** hat einen Henkel. Der Henkel ist an der dem Grundkörper **18** gegenüberliegenden Seite des Stegs **72** angeordnet. Der beispielhafte Henkel **80** besteht aus zwei Fahnen **80,** welche jeweils an einem Ende des Stegs **72** beginnen und in radialer Richtung beabstandet von dem Steg **72** in Umfangsrichtung **41** aufeinander zulaufen. Die Spitzen der beiden Fahnen **80** können durch einen Spalt **81** getrennt sein. Der Anwender kann beispielsweise mit einem Schraubendreher oder einen anderen flachen Werkzeug in den vom Steg **72** und Henkel **80** umgebenen Schlitz **82** greifen, um den Sicherungsbügel **68** aus der Nut **69** zu heben.

Der Sicherungsbügel **68** ist vorzugsweise plattenförmig ausgebildet. Die Klemmschenkel **73** haben eine Breite, gemessen in radialer Richtung **39,** welche deutlich größer als die Dicke, gemessen längs der Achse **5,** des Sicherungsbügels **68** ist. Eine Breite des Stegs **72** ist geringer als die Breite der Klemmschenkel **73.**

Der Sicherungsbügel **68** kann einen von dem Steg **72** in radialer Richtung zu der Achse **5** vorstehenden Dorn **83** aufweisen. Der Grundkörper **18** hat eine entsprechende Vertiefung **84,** um den Dorn **83** aufzunehmen. Die Vertiefung **84** ist, zumindest in Umfangsrichtung, etwa formschlüssig zu dem Dorn **83.** Der Sicherungsbügel **68** ist gegen ein Verdrehen um die Arbeitsachse **5** gehindert und hat somit einen festen Azimut, d.h. eine festgelegte Winkelausrichtung. Der Henkel **80** und die Verriegelungskugeln **30** haben z.B. den gleichen Azimut und liegen in einer Flucht parallel zu der Arbeitsachse **5.** Eine Außenkontur des Grundkörper **18** ist mit der abgeflachten Schlüsselfläche **24** im Bereich der Verriegelungskugeln **30** versehen. Die abgeflachte Schlüsselfläche **24** ist vorzugsweise bis zu der ringförmigen Nut **69** verlängert. Vor dem Schlitz **82** ist hierdurch ein Hohlraum **60** zwischen der Buchse **31** und der Schlüsselfläche **24,** in welchen der Anwender das Abziehwerkzeug einführen kann.

Der Sicherungsbügel **68** findet bei der dargestellten Ausführungsform mit dem entnehmbaren Einsatz **44** besondere Aufmerksamkeit. Ferner besteht ein Interesse an dem Sicherungsbügel **68** bei einem einteiligen Aufnahmeraum **85,** dessen gesamte Wandfläche **86** von einem Rohr **87** des Grundkörper **88** gebildet ist.

Eine Abdeckung **89** aus einem weichen Kunststoff ist auf die Spitze des Grundkörpers **18** aufgesteckt und schützt die beiden Verriegelungen **21, 22** vor Staub. Die Abdeckung **89** kann von dem Grundkörper **18** per Hand abgezogen werden.

Der beispielhafte Flansch **20** ist auf die Abtriebswelle **11** aufschiebbar. Die lösbare Flanschverriegelung **22** ermöglicht den Flansch **20** drehstarr an die Abtriebswelle **11** anzulegen und ohne Werkzeug zu lösen. Die Flanschverriegelung **22** hat mehrere Kopplungskugeln **90** oder Kopplungszapfen, die durch radiale Öffnungen **46** des Flansches **20** in entsprechende Vertiefungen der Abtriebswelle **11** eingreifen. Eine Betätigungshülse **66** der Flanschverriegelung **22** ist auf den Flansch **20** aufgesetzt und entlang der Arbeitsachse **5** beweglich. Eine Feder **36** hält die Betätigungshülse **66** in einer Verriegelungsstellung, in welcher eine radiale Bewegung der Kopplungskugeln **90** gehemmt ist und diese somit in Eingriff mit der Abtriebswelle **11** gezwungen sind. Der Anwender kann die Betätigungshülse **66,** vorzugsweise in Entnahmerichtung **6** des Werkzeugs **4** gegen die Feder **36** verschieben, bis die Kopplungskugeln **90** radial ausweichen und außer Eingriff gelangen können. Der Werkzeughalter **8** kann abgenommen werden.

Auch wenn der abnehmbare Werkzeughalter **8** eine für viele Anwendungen bevorzugte Ausführungsform ist, ist eine dauerhafte Anbindung oder nur per Werkzeug lösbare Anbindung des Grundkörpers **18** an die Abtriebswelle **11** für andere Anwendungen von Vorteil, z.B. für einen einfachen und kompakten Aufbau. Der Grundkörper **18** kann beispielsweise einstückig mit einem Führungsrohr des Zwischenschlägers **16** oder des Schlägers **13** gebildet sein.

## Patentansprüche

1. Werkzeughalter (8) für eine Handwerkzeugmaschine mit:
einem Rohr (19; 87), dessen Innenfläche (52, 53; 86) einen zu einer Arbeitsachse (5) koaxialen Aufnahmeraum (26; 85) für ein Einsteckende (7) eines Werkzeugs (4) definiert und in dessen Außenfläche (24, 25) eine um die Achse (5) umlaufende Nut (69) ausgebildet ist,
einem radial beweglichen Verriegelungselement (30), das durch eine radiale Öffnung in dem Rohr (19; 87) teilweise in den Aufnahmeraum (26; 85) vorsteht,
einer Verriegelungshülse (31, 32) die auf der Außenfläche (24, 25) des Rohrs (19; 87) längs der Achse (5) beweglich geführt ist, die in einer Grundstellung an dem Verriegelungselement (30) in radialer Richtung anliegt,
einer Feder (36), die die Verriegelungshülse (31, 32) in die Grundstellung treibt, und einem Sicherungsbügel (68), an dem die Verriegelungshülse (31, 32) gegen die Kraft der Feder (36) abgestützt ist, wobei der Sicherungsbügel (68) in die Nut (69) eingesetzt ist,
**dadurch gekennzeichnet,**
**dass** der Sicherungsbügel (68) die Nut (69) um weniger als 250 Grad umschließt, und dass die Verriegelungshülse (31, 32) einen in Richtung (6) zu dem Sicherungsbügel (68) vorstehenden hohlzylindrischen Vorsprung (70) aufweist, dessen radiale Innenfläche (71) an dem Sicherungsbügel (68) anliegt, wenn die Verriegelungshülse (31, 32) in der Grundstellung ist, und der Vorsprung (70) von dem Sicherungsbügel (68) durch Verschieben der Verriegelungshülse (31, 32) gegen die Feder (36) entfernbar ist.

2. Werkzeughalter (8) nach Anspruch 1, **dadurch gekennzeichnet, dass** die Außenfläche (24, 25) eine an die Nut (69) längs der Achse (5) angrenzende ebene Schlüsselfläche (24) aufweist und der Sicherungsbügel (68) eine Verdrehsicherung (83, 84) für eine zu der Schlüsselfläche (24) definierte Ausrichtung des Sicherungsbügels (68) aufweist.

3. Werkzeughalter (8) nach Anspruch 2, **dadurch gekennzeichnet, dass** der Sicherungsbügel (68) zwei gegenüberliegende Klemmschenkel (73), welche in der Nut (69) anliegen, und einen zwischen den Klemmschenkeln (73) zu der Achse (5) vorstehenden Dorn (83) aufweist, wobei der Dorn (83) in eine in Umfangsrichtung (41) begrenzte Vertiefung (84) eingreift.

4. Werkzeughalter (8) nach einem der vorhergehenden Ansprüche, **dadurch gekennzeichnet, dass** der Sicherungsbügel (68) einen Henkel (80) aufweist.

5. Werkzeughalter (8) nach Anspruch 4, **dadurch gekennzeichnet, dass** der Henkel (80) durch zwei in Umfangsrichtung (41) aufeinander zulaufende Fahnen (80) gebildet ist.

6. Werkzeughalter (8) nach Anspruch 5, **dadurch gekennzeichnet, dass** die Fahnen (80) durch einen Spalt (81) voneinander getrennt sind.

7. Werkzeughalter (8) nach einem der vorhergehenden Ansprüche, **dadurch gekennzeichnet, dass** der Sicherungsbügel (68) die Nut (69) zwischen 200 Grad und 240 Grad umschließt.

## Claims

1. Tool holder (8) for a hand-held power tool, comprising:
a tube (19; 87), the inner surface (52, 53; 86) of which defines a receiving space (26; 85) for the insertion end (7) of a tool (4) coaxial with a working axis (5) and the outer surface (24, 25) of which is provided with a groove (69) running around the axis (5),
a radially movable locking element (30) projecting partly into the receiving space (26; 85) through a radial opening in the tube (19; 87),
a locking sleeve (31, 32) movably guided along the axis (5) on the outer surface (24, 25) of the tube (19; 87) and bearing against the locking element (30) in the radial direction in a normal position,
a spring (36) driving the locking sleeve (31, 32) into the normal position and a retaining clip (68) on which the locking sleeve (31, 32) is supported against the force of the spring (36), the retaining clip (68) being inserted into the groove (69),
**characterised in that**
the retaining clip (68) surrounds the groove (69) over less than 250 degrees, that the locking sleeve (31, 32) has a hollow cylindrical projection (70) projecting in the direction of the retaining clip (68), the radial inner surface (71) of which bears against the retaining clip (68) when the locking sleeve (31, 32) is in the normal position, and that the projection (70) can be removed from the retaining clip (68) by displacing the locking sleeve (31, 32) against the spring (36).

2. Tool holder (8) according to claim 1, **characterised in that** the outer surface (24, 25) has a flat key surface (24) adjoining the groove (69) along the axis (5) and the retaining clip (68) has an anti-rotation element (83, 84) for defined alignment of the retaining clip (68) relative to the key surface (24).

3. Tool holder (8) according to claim 2, **characterised in that** the retaining clip (68) has two opposing clamping arms (73) that rest in the groove (69) and a pin (83) between the clamping arms (73) projecting towards the axis (5), the pin (83) engaging in a recess (84) delimited in the circumferential direction (41).

4. Tool holder (8) according to one of the preceding claims, **characterised in that** the retaining clip (68) has a hoop (80).

5. Tool holder (8) according to claim 4, **characterised in that** the hoop (80) is formed by two lugs (80) converging towards one another in the circumferential direction (41).

6. Tool holder (8) according to claim 5, **characterised in that** the lugs (80) are separated from one another by a gap (81).

7. Tool holder (8) according to one of the preceding claims, **characterised in that** the retaining clip (68) surrounds the groove (69) over between 200 degrees and 240 degrees.

## Revendications

1. Porte-outil (8) pour une machine-outil manuelle comportant :
un tube (19 ; 87) dont la surface intérieure (52, 53 ; 86) définit un espace de réception (26, 85) coaxial à un axe de travail (5) pour une extrémité à insérer (7) d'un outil (4), et dans la surface extérieure (24, 25) duquel est formée une rainure (69) entourant l'axe (5),
un élément de blocage radialement mobile (30) qui fait partiellement saillie dans l'espace de réception (26, 85) à travers une ouverture radiale dans le tube (19 ; 87),
une douille de blocage (31, 32) qui est guidée de manière mobile sur la surface extérieure (24, 25) du tube (19 ; 87) le long de l'axe (5), laquelle douille de blocage vient en butée, dans une position initiale, contre l'élément de blocage (30) dans une direction radiale,
un ressort (36) qui entraîne la douille de blocage (31, 32) dans la position initiale, et
un clips de blocage (68) au moyen duquel la douille de blocage (31, 32) est supportée à l'encontre de la force du ressort (36), dans lequel le clips de blocage (68) est inséré dans la rainure (69),
**caractérisé en ce que** le clips de blocage (68) entoure la rainure (69) sur moins de 250 degrés,
et **en ce que** la douille de blocage (31, 32) comporte une saillie cylindrique creuse (70) faisant saillie dans une direction (6) par rapport au clips de blocage (68), la surface intérieure radiale (71) de la saillie (70) étant en butée contre le clips de blocage (68), lorsque la douille de blocage (31, 32) est dans la position initiale, et la saillie (70) peut être éloignée du clips de blocage (68) en déplaçant la douille de blocage (31, 32) contre le ressort (36).

2. Porte-outil (8) selon la revendication 1, **caractérisé en ce que** la surface extérieure (24, 25) comporte un méplat pour clé (24) bordant la rainure (69) le long de l'axe (5) et le clips de blocage (68) comporte un dispositif de blocage en rotation (83, 84) pour une orientation définie du clips de blocage (68) par rapport au méplat pour clé (24).

3. Porte-outil (8) selon la revendication 2, **caractérisé en ce que** le clips de blocage (68) comporte deux bras de serrage opposés (73) qui sont en butée dans la rainure (69), et un mandrin (83) faisant saillie entre les bras de serrage (73) par rapport à l'axe (5), dans lequel le mandrin (83) s'engage dans un évidement (84) limité dans une direction circonférentielle (41).

4. Porte-outil (8) selon l'une des revendications précédentes, **caractérisé en ce que** le clips de blocage (68) comporte une oreille (80).

5. Porte-outil (8) selon la revendication 4, **caractérisé en ce que** l'oreille (80) est formée à travers deux languettes (80) convergeant l'une vers l'autre dans la direction circonférentielle (41).

6. Porte-outil (8) selon la revendication 5, **caractérisé en ce que** les languettes (80) sont séparées l'une de l'autre par un espace (81).

7. Porte-outil (8) selon l'une des revendications précédentes, **caractérisé en ce que** le clips de blocage (68) entoure la rainure (69) entre 200 degrés et 240 degrés.
